# EUROPEAN PATENT SPECIFICATION

(11) **EP 0 385 409 B1**
(45) Date of publication and mention of the grant of the patent: **28.09.1994**
(21) Application number: 90103829.9
(22) Date of filing: 27.02.1990
(51) Int. Cl.: B41J 13/00, B65H 5/00

(54) **Sheet feeding device**
Blattfördervorrichtung
Dispositif d'avance de feuille

(30) Priority: 28.02.1989 JP 47367/89
(43) Date of publication of application: 05.09.1990
(73) Proprietor: CANON KABUSHIKI KAISHA, Tokyo (JP)
(72) Inventor: Kataoka, Kenichi, Yokohama-shi,Kanagawa-ken (JP); Nishimoto, Yoshifumi, Midori-ku, Yokohama-shi, Kanagawa-ken (JP); Igaki, Masahiko, Nerima-ku, Tokyo (JP); Yanagi, Eiichi, Inagi-shi, Tokyo (JP)
(74) Representative: Tiedtke, Harro, Dipl.-Ing.

(56) References cited:
- PATENT ABSTRACTS OF JAPAN vol. 9, no. 34 (M-357)(1757), 14 February 1985; & JP-A-59177243 (CANON K.K.) 06.10.1984
- PATENT ABSTRACTS OF JAPAN vol. 12, no. 105 (M-681)(2952), 6 April 1988; & JP-A-62235115 (E.E. & K.K.) 15.10.1987
- PATENT ABSTRACTS OF JAPAN vol. 9, no. 330 (M-442)(2053), 25 December 1985; & JP-A-60161846 (RICOH K.K.) 23.08.1985
- PATENT ABSTRACTS OF JAPAN vol. 12, no. 171 (M-700)(3018), 21 May 1988; & JP-A-62285834 (MATSUSHITA ELECTRIC IND. CO. LTD.) 11.12.1987

## Description

### BACKGROUND OF THE INVENTION

### Field of the Invention

The present invention relates to a sheet feeding device adapted for the use in computers, copying machines, printers, facsimile apparatus, word processors, typewriters or the like, and more particularly to a sheet feeding device utilizing a travelling vibration wave.

### Related Background Art

A sheet feeding device utilizing a travelling vibration wave has already been disclosed for example in the document JP-A-59/177 243. In this device, the sheet feeding is achieved by supporting a sheet between a pair of vibration members composed of an elastic material and pressed against each other by a suitable pressure, and by generating travelling vibration waves in said vibration members. On each vibration member two groups of electromechanical energy converting elements such as piezoelectric elements are adhered or pressed, which are arranged with a phase difference of an odd multiple of λ/4 between the two groups, and, within each group, with a pitch of λ/2 and with an alternating expansion-contraction polarity. To one of the groups of piezo-electric elements on each vibration member an AC electric field of a frequency in the vicinity of specific frequencies of the vibration members is applied (in practice, the specific frequency of either vibration member), while to the other of the groups of piezo-electric elements on each vibration member the AC electric field is applied with a π/2 phase shift achieved by a π/2 phase shifter, thereby generating travelling vibration waves in the vibration members symmetrically with respect to the sheet feeding plane. A travelling vibration member in each vibration member causes an elliptic movement in each point on a surface of the member opposite to the piezo-electric elements, and the sheet feeding is achieved by the elliptic movement of each point on mutually opposed faces of the vibration members, symmetrically with respect to the sheet feeding plane, by means of friction between the sheet and the vibration members, wherein a change in the sheet feeding speed can be achieved for example by a change in the amplitude of the travelling vibration waves generated in the vibration members.

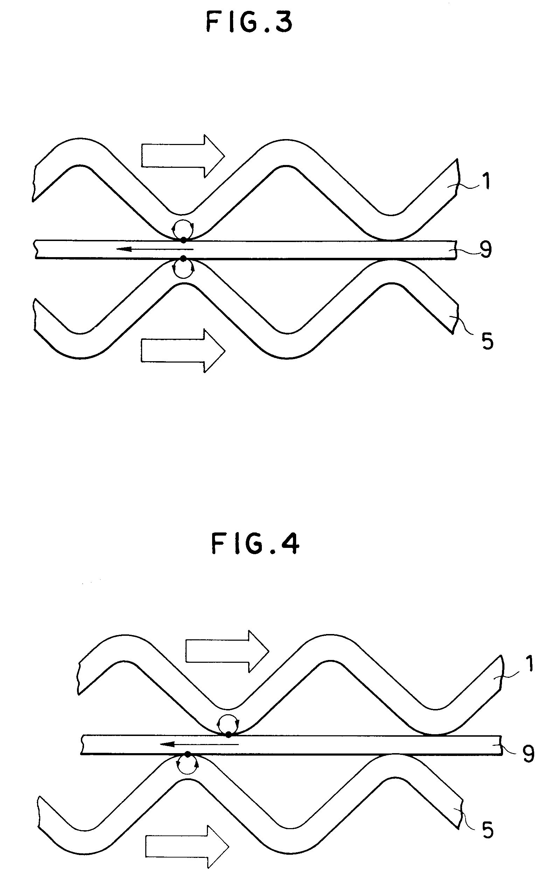

Fig. 3 schematically shows the principle of generating the sheet feeding force by such a travelling vibration wave, in which a sheet 9 is pinched with a suitable pressure between vibration members 1, 5 in which travelling vibration waves are generated as illustrated. Each point on the surface of the vibration members 1, 5 moves generally along an elliptic trajectory. In the vibration member 1, when the travelling vibration wave moves to the right, as indicated by a white arrow, the surface point moves clockwise along said elliptic trajectory. As the travelling vibration waves generated in the vibration members 1, 5 mutually have a spatial phase difference of 180°, the projecting portions of the waves toward the sheet 9 always proceed with a mutually opposed relationship. Since each point on these projecting portions moves in a direction opposite to the proceeding direction of the vibration waves in the members 1, 5, a sheet feeding force to the left is generated, as indicated by a black arrow. In the recessed portions, a sheet feeding force is generated in a direction corresponding to the proceeding direction of the travelling vibration waves. However, this feeding force is weaker because of the smaller friction between the sheet and the vibration members, resulting from a pressure which is lower in the recessed portions than in the projecting portions. Thus, the total sheet feeding force acts in a direction opposite to the proceeding direction of the travelling vibration waves.

However, in such a conventional sheet feeding device, the travelling vibration waves are generated in both vibration members with AC voltages of a same phase, even when the specific frequency of the vibration member varies individually for example by a fluctuation in the sheet thickness or a variation in the environmental conditions. Consequently, a spatial phase aberration or deviation may be generated between the vibrating waves of both vibration members as shown in Fig. 4, which is due to a change in the load or in the environmental conditions, thus resulting in a fluctuation in the sheet feeding amount.

### SUMMARY OF THE INVENTION

An object of the present invention is to provide a sheet feeding device capable of a stable sheet feeding despite of a change of the load or of the environmental conditions.

Further, the present invention aims at the provision of a sheet feeding device capable of a stable sheet feeding, by maintaining the spatial phase difference between the travelling vibration waves generated in the vibration members supporting the sheet therebetween, constantly at zero.

The aforementioned object is achieved by the features indicated in the independent claim 1.

According to the technical teaching of this claim, a correcting means is provided by means of which the vibration wave of at least one of the vibration means can be corrected when a spatial phase aberration or deviation occurs. Thus, a stable sheet feeding can be achieved independently of the above operational conditions.

Advantageously developed embodiments of the invention are subject-matters of the dependent claims 2 to 15.

In the following, preferred embodiments of the invention will be described with reference to the drawings.

### BRIEF DESCRIPTION OF THE DRAWINGS

Fig. 1 is a block diagram of a first embodiment of the sheet feeding device according to the present invention;
Fig. 2 is a block diagram of a second embodiment;
Fig. 3 is a schematic view showing the working principle of the sheet feeding device; and
Fig. 4 is a schematic view showing a spatial phase aberration between the travelling vibration waves.

### DESCRIPTION OF THE PREFERRED EMBODIMENTS

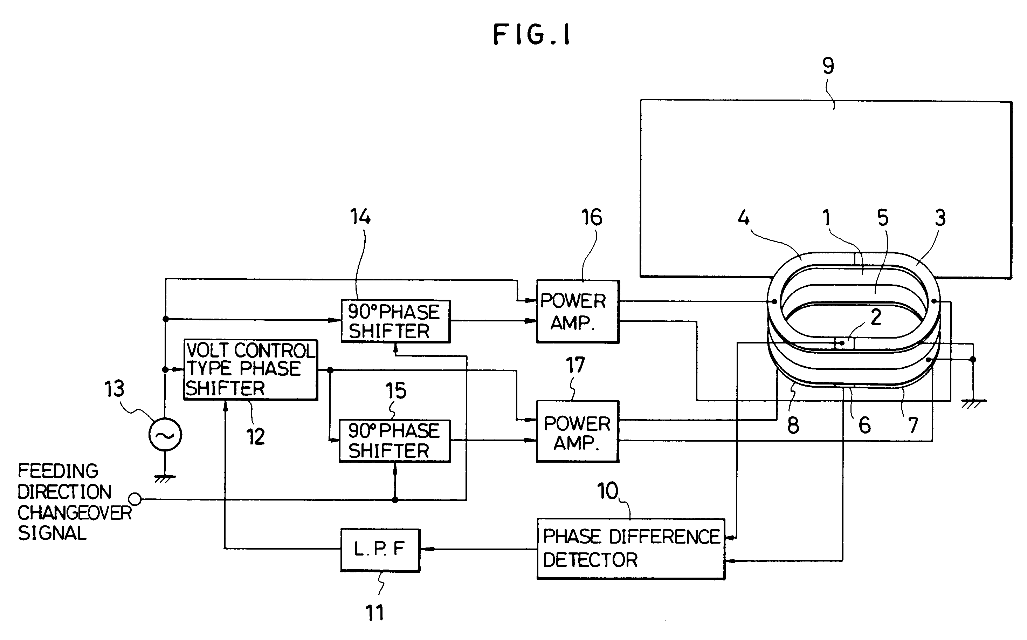

Fig. 1 is a block diagram of a first embodiment of the sheet feeding device according to the present invention.

First and second metallic vibration members 1, 5 of an elongated circular shape with a certain thickness support a sheet 9 by pinching it therebetween with a suitable pressure, and, on mutually distant faces thereof, are respectively provided with sections 3, 4; 7, 8 of two groups of piezo-electric elements which are polarized in the already known manner, so as to generate, in each vibration member 1, 5, two standing waves mutually different by λ/4 in position ( λ being the wavelength of the vibration wave) or by 90° in time, thereby synthesizing a travelling vibration wave in each vibration member 1, 5. Said first and second vibration members 1, 5 are electrically maintained at the ground potential. The first vibration member 1 is further provided with a detecting piezoelectric element 2 for detecting the vibration state of the travelling vibration wave generated in said first vibration member 1, and the second vibration member 5 is likewise provided with a detecting piezoelectric element 6 for detecting the state of the vibration wave in said second vibration member 5. There are further provided a known phase difference detector 10 for detecting the phase difference in time, at a same spatial position, of the travelling vibration waves generated in the first and second vibration members 1, 5, on the basis of the output signals of the detecting piezo-electric elements 2, 6; a known low-pass filter (LPF) 11 for amplifying and integrating the output of the phase difference detector 10; a known voltage-controlled phase shifter 12 for displacing the phase of the output signal of an oscillator 13 to be explained later, in accordance with the output signal of the low-pass filter 11; an oscillator 13 for generating a reference signal for AC voltages to be applied to the sections 3, 4, 7, 8 of the piezoelectric elements for forming the travelling vibrations waves in the vibration members 1, 5; a first 90° phase shifter 14 for shifting the phase of the reference signal from the oscillator 13 by +90° or -90° in accordance with a feeding direction switch signal from a means not shown for setting the sheet feeding direction; a second 90° phase shifter for shifting the output of the voltage-controlled phase shifter 12 by +90° or -90° in accordance with said feeding direction switch signal; and power amplifiers 16, 17 for amplifying the output signals of the oscillator 13 and the first 90° phase shifter and those of the voltage-controlled phase shifter 12 and the second 90° phase shifter 15 with suitable gains for the supply to the sections 3, 4; 7, 8 of the piezo-electric elements.

In the sheet feeding device according to the present embodiment explained above, and as shown in Fig. 4, if the phase in time of the travelling vibration wave formed in the first vibration member 1 is delayed at a certain spatial point from the phase in time of the travelling vibration wave formed in the second vibration member 5 at a point opposing the above-mentioned spatial point (it is assumed that the peaks of the two travelling vibration waves mutually meet as shown in Fig. 3 in case of zero phase difference in time), the phase of the output signal of the detecting piezo-electric element 2 for detecting the vibration state of the first vibration member 1 is delayed from that of the output signal of the detecting piezo-electric element 6 for the second vibration member 5. Thus, the phase detector 10 provides a negative output signal, and the output signal of the low-pass filter 11 decreases. Consequently, the output of the voltage-controlled phase shifter 12 is delayed in phase so that the AC voltages applied to the piezo-electric element sections 7, 8 of the second vibration member 5 are also delayed in phase. Thus, the phase in time of the travelling vibration wave formed in the second vibration member 5 is delayed until the peaks of this vibration wave match those of the vibration wave formed in the first vibration member 1, as shown in Fig. 3.

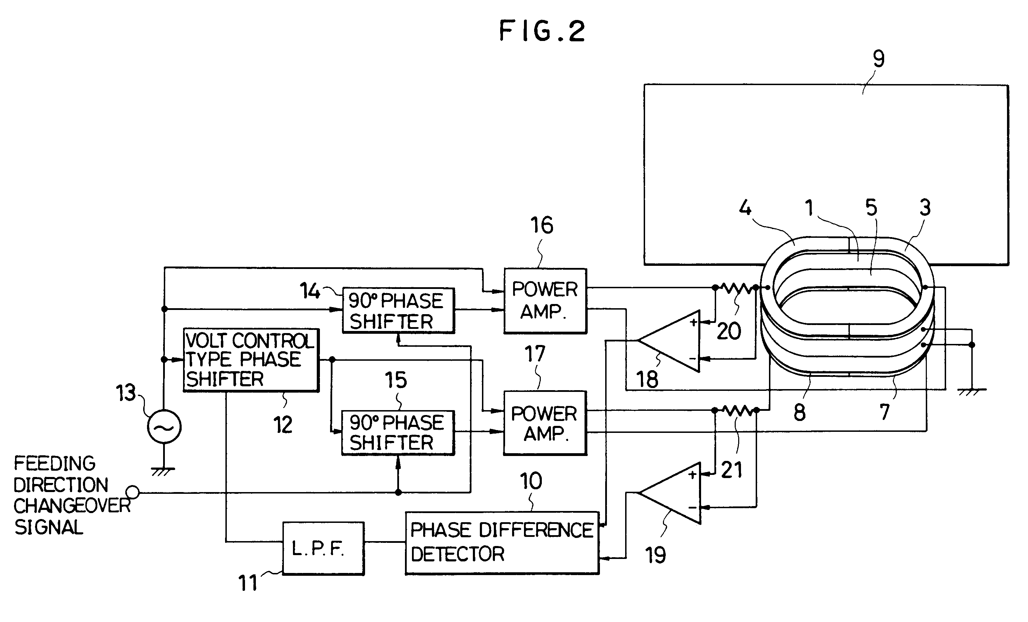

Fig. 2 is a block diagram of a second embodiment of the sheet feeding device according to the present invention, in which the same components as those in the foregoing first embodiment are indicated by the same numbers and will not be explained further.

According to Fig. 2, there are provided differential amplifiers 18, 19 for respectively detecting the currents flowing into the driving piezo-electric section 4 of the vibration member 1 and the driving piezo-electric section 8 of the second vibration member 5, by amplifying the voltages across resistors 20, 21. In contrast to the foregoing first embodiment in which signals from the detecting piezo-electric elements 2, 6, are applied to the phase difference detector 10 the output signals of the differential amplifiers 18, 19 are applied to the phase difference detector 10 in the second embodiment.

More specifically, in the foregoing first embodiment, the vibration members 1, 5 are provided with detecting piezo-electric elements 2, 6 for detecting the vibration states of the vibration members 1, 5, and the control is made such that a constant relationship between the phases of the two detected signals is to be maintained. In the present embodiment, the in-flowing currents upon the application of AC voltages to the piezo-electric sections 3, 4, 7, 8 of the vibration members 1, 5 are detected by the differential amplifiers 18, 19, and the phase difference between the AC voltages applied to the driving piezo-electric sections are controlled to maintain zero phase difference between the currents flowing into the driving piezo-electric sections.

As explained in the foregoing, the present invention allows to maintain zero spatial phase difference between the travelling vibration waves formed in a pair of vibration members 1, 5 supporting a sheet 9 therebetween, even when the phases are affected for example by a change in the specific frequency of the vibration members 1, 5 resulting from a fluctuation in the thickness of the sheet or a change in the environmental conditions, thereby significantly reducing the uneveness of the sheet feeding. It is, therefore, possible to improve the efficiency of the sheet feeding, and to obtain a fine and beautiful image printing when applied for example to a facsimile apparatus.

In the foregoing embodiments, it is assumed that the spatial phases of the vibration waves in the first and second vibration members 1, 5 are affected by the fluctuation in the thickness of the sheet or a change in the environmental conditions. However, when such a fluctuation affects the spatial phases of the vibration of only one vibration member, it is also possible to solely detect the vibration wave of the affected vibration member, thereby determining the aberration of the vibration wave from the reference position, and to regulate the phase of the vibration wave of the affected vibration member in accordance with the detected amount of aberration.

## Claims

1. A feeding device for a sheet (9) to be fed, comprising a first vibration means (1, 3, 4) for generating a first vibration wave thereon in response to an applied electrical signal, a second vibration means (5, 7, 8) opposed to said first vibration means (1, 3, 4) across said sheet and adapted for generating a second vibration wave thereon in response to an applied electrical signal, said first and second vibration waves causing a movement of said sheet, **characterized by** correcting means for correcting the vibration wave of at least one of said vibration means.

2. A feeding device according to claim 1, wherein said correcting means includes a detecting member (2, 6; 18 - 21) for detecting the state of the vibration wave in at least one of said vibration means (1, 3 - 5, 7, 8) and for generating a corresponding control signal, and a correcting member (10 - 12) for correcting the vibration wave of at least one of said vibration means in response to said control signal from said detecting means.

3. A feeding device according to claim 2, wherein said detecting member (2, 6; 18 - 21) generates said control signal corresponding to the amount of aberration from a predetermined spatial position.

4. A feeding device according to claim 2, wherein said first and second vibration waves, respectively, are travelling vibration waves.

5. A feeding device according to claim 4, wherein said detecting member (2, 6; 18 - 21) generates said control signal corresponding to the degree of deviation from a predetermined spatial position at a certain time.

6. A feeding device according to claim 4 or 5, wherein said first vibration means (1, 3, 4) includes a first electromechanical conversion means (3, 4) for generating said first travelling vibration wave on said first vibration means in response to a first applied electrical signal, and said second vibration means (5, 7, 8) includes a second electromechanical conversion means (7, 8) for generating said second travelling vibration wave on said second vibration means in response to a second applied electrical signal.

7. A feeding device according to one of the claims 4 to 6, wherein said detecting member comprises a first detecting element (2; 18, 20) for generating a first control signal corresponding to the state of said first travelling vibration wave, and a second detecting element (6; 19, 21) for generating a second control signal corresponding to the state of said second travelling vibration wave.

8. A feeding device according to claim 7, wherein said correcting member (10 - 12) detects the phase difference between said first and second control signals and changes the phase of at least one of said first and second travelling vibration waves according to said detected phase difference.

9. A feeding device according to claim 7 or 8, wherein said first detecting element (2) is provided on said first vibration means (1, 3, 4) and said second detecting element (6) is provided on said second vibration means (5, 7, 8).

10. A feeding device according to claim 9, wherein said second detecting element (6) is provided in a position on said second vibration means (5, 7, 8) spatially corresponding to the position of said first detecting element (2) on said first vibration means (1, 3, 4).

11. A feeding device according to claim 9 or 10, wherein each of said first and second detecting elements (2, 6) includes a piezoelectric element.

12. A feeding device according to claims 7 or 8, wherein said first detecting element (18, 20) generates said first control signal corresponding to the electrical phase of said first applied electrical signal and said second detecting element (19, 21) generates said second control signal corresponding to the electrical phase of said second applied electrical signal.

13. A feeding device according to one of the preceding claims, wherein said first vibration means (1, 3, 4) and said second vibration means (5, 7, 8), respectively, consist of an elongated circular-shaped elastic member having a straight portion therein.

14. A feeding device according to claim 13, wherein said sheet (9) is arranged so as to be pinched between the straight portion of said first vibration means (1, 3, 4) and the straight portion of said second vibration means (5, 7, 8).

15. A feeding device according to one of the preceding claims, wherein said first and second vibration means (1, 3 - 5, 7, 8) are arranged so as to frictionally contact said sheet (9).

## Patentansprüche

1. Eine Fördervorrichtung für ein zu förderndes Blatt (9), mit einer ersten Vibrationseinrichtung (1, 3, 4) zum Erzeugen einer ersten Vibrationswelle darauf im Ansprechen auf ein angelegtes elektrisches Signal, einer zweiten Vibrationseinrichtung 5, 7, 8 gegenüber der ersten Vibrationseinrichtung (1, 3, 4) auf der anderen Seite des Blattes, und angepaßt zum Erzeugen einer zweiten Vibrationswelle darauf im Ansprechen auf ein angelegtes elektrisches Signal, wobei die erste und zweite Vibrationswelle eine Bewegung des Blattes verursachen, **gekennzeichnet durch** eine Korrektureinrichtung zum Korrigieren der Vibrationswelle zumindest einer der Vibrationseinrichtungen.

2. Eine Fördervorrichtung nach Anspruch 1, wobei die Korrektureinrichtung ein Detektionselement (2, 6; 18 - 21) in zumindest einer der Vibrationseinrichtungen (1, 3 - 5, 7, 8) umfaßt zum Erkennen des Zustands der Vibrationswelle und zum Erzeugen eines entsprechenden Regelsignals, und ein Korrekturelement (10 - 12) zum Korrigieren der Vibrationswelle zumindest einer der Vibrationseinrichtungen im Ansprechen auf das Regelsignal von der Detektionseinrichtung.

3. Eine Fördervorrichtung nach Anspruch 2, wobei das Detektionselement (2, 6; 18 - 21) ein Regelsignal entsprechend dem Betrag an Abweichung von einer vorgegebenen räumlichen Position erzeugt.

4. Eine Fördervorrichtung nach Anspruch 2, wobei die erste und zweite Vibrationswelle jeweils sich bewegende Vibrationswellen sind.

5. Eine Fördervorrichtung nach Anspruch 4, wobei das Detektionselement (2, 6; 18 - 21) das Regelsignal entsprechend dem Grad an Abweichung von einer vorbestimmten räumlichen Position zu einem bestimmten Zeitpunkt erzeugt.

6. Eine Fördervorrichtung nach Anspruch 4 oder 5, wobei die erste Vibrationseinrichtung (1, 3, 4) eine erste elektromechanische Wandeleinrichtung (3, 4) zum Erzeugen einer ersten sich bewegenden Vibrationswelle auf der ersten Vibrationseinrichtung im Ansprechen auf ein erstes angelegtes elektrisches Signal erzeugt, und die zweite Vibrationseinrichtung (5, 7, 8) eine zweite elektromechanische Wandeleinrichtung (7, 8) zum Erzeugen einer zweiten sich bewegenden Vibrationswelle auf der zweiten Vibrationseinrichtung im Ansprechen auf ein zweites angelegtes elektrisches Signal umfaßt.

7. Eine Fördervorrichtung entsprechend einem der Ansprüche 4 bis 6, wobei das Detektionselement ein erstes Detektionselement (2; 18, 20) zum Erzeugen eines ersten Regelsignals umfaßt, das dem Zustand der ersten sich bewegenden Vibrationswelle entspricht, und ein zweites Detektionselement (6; 19, 21) zum Erzeigen eines zweiten Regelsignals umfaßt, das dem Zustand der zweiten sich bewegenden Vibrationswelle entspricht.

8. Eine Fördervorrichtung nach Anspruch 7, wobei das Korrekturelement (10 - 12) die Phasendifferenz zwischen dem ersten und zweiten Regelsignal erkennt, und die Phase zumindest einer der ersten oder zweiten sich bewegenden Vibrationswelle entsprechend der erkannten Phasendifferenz ändert.

9. Eine Fördervorrichtung nach Anspruch 7 oder 8, wobei das erste Detektionselement (2) an der ersten Vibrationseinrichtung (1, 3, 4) vorgesehen ist, und das zweite Detektionselement (6) an der zweiten Vibrationseinrichtung (5, 7, 8) vorgesehen ist.

10. Eine Fördervorrichtung nach Anspruch 9, wobei das zweite Detektionselement (6) an einer Position an der zweiten Vibrationseinrichtung (5, 7, 8) vorgesehen ist, die räumlich der Position des ersten Detektionselements (2) an der ersten Vibrationseinrichtung (1, 3, 4) entspricht.

11. Eine Fördervorrichtung nach Anspruch 9 oder 10, wobei jedes der ersten und zweiten Detektionselemente (2, 6) ein piezoelektrisches Element umfaßt.

12. Eine Fördervorrichtung nach Anspruch 7 oder 8, wobei das erste Detektionselement (18, 20) ein erstes Regelsignal erzeugt, das der elektrischen Phase des ersten angelegten elektrischen Signals entspricht und das zweite Detektionselement (19, 21) ein zweites Regelsignal erzeugt, das der elektrischen Phase des zweiten angelegten elektrischen Signals entspricht.

13. Eine Fördervorrichtung nach einem der vorangehenden Ansprüche, wobei die erste Vibrationseinrichtung (1, 3, 4) und die zweite Vibrationseinrichtung (5, 7, 8) jeweils aus einem länglichen, elastischen Element geschlossener Form bestehen, das einen geraden Abschnitt aufweist.

14. Eine Fördervorrichtung nach Anspruch 13, wobei das Blatt so angeordnet ist, daß es zwischen den geraden Abschnitt der ersten Vibrationseinrichtung (1, 3, 4) und den geraden Abschnitt der zweiten Vibrationseinrichtung (5, 7, 8) geklemmt wird.

15. Eine Fördervorrichtung nach einem der vorangehenden Abschnitte, wobei die erste und zweite Vibrationseinrichtung (1, 3 - 5, 7, 8) so angeordnet sind, daß sie einen Reibungskontakt mit dem Blatt 9 aufweisen.

## Revendications

1. Dispositif d'alimentation pour une feuille (9) devant être avancée, comportant des premiers moyens vibratoires (1, 3, 4) destinés à générer une première onde vibratoire en réponse à l'application d'un signal électrique, des seconds moyens vibratoires (5, 7, 8) opposés auxdits premiers moyens vibratoires (1, 3, 4) à travers ladite feuille et conçus pour générer une seconde onde vibratoire en réponse à l'application d'un signal électrique, lesdites première et seconde ondes vibratoires provoguant un mouvement de ladite feuille, caractérisé par des moyens de correction destinés à corriger l'onde vibratoire d'au moins l'un desdits moyens de vibration.

2. Dispositif d'alimentation selon la revendication 1, dans lequel lesdits moyens de correction comprennent un élément de détection (2, 6 ; 18-21) destiné à détecter l'état de l'onde vibratoire dans au moins l'un desdits moyens de vibration (1, 3 - 5, 7, 8) et à générer un signal de commande correspondant, et un élément de correction (10-12) destiné à corriger l'onde vibratoire d'au moins l'un desdits moyens vibratoires en réponse audit signal de commande provenant desdits moyens de détection.

3. Dispositif d'alimentation selon la revendication 2, dans lequel ledit élément de détection (2, 6 ; 18-21) génère ledit signal de commande correspondant à l'amplitude de l'aberration par rapport à une position spatiale prédéterminée.

4. Dispositif d'alimentation selon la revendication 2, dans lequel lesdites première et seconde ondes vibratoires, respectivement, sont des ondes vibratoires progressives.

5. Dispositif d'alimentation selon la revendication 4, dans lequel ledit élément de détection (2, 6 ; 18-21) génère le signal de commande correspondant au degré d'écartement à partir d'une position spatiale prédéterminée à un certain temps.

6. Dispositif d'alimentation selon la revendication 4 ou 5, dans lequel lesdits premiers moyens vibratoires (1, 3, 4) comprennent un premier moyen de conversion électromécanique (3, 4) destiné à générer ladite première onde vibratoire progressive sur lesdits premiers moyens de vibration en réponse à l'application d'un premier signal électrique, et lesdits seconds moyens vibratoires (5, 7, 8) comprennent un second moyen de conversion électromécanique (7, 8) destiné à générer ladite seconde onde vibratoire progressive sur lesdits seconds moyens vibratoires en réponse à l'application d'un second signal électrique.

7. Dispositif d'alimentation selon l'une des revendications 4 à 6, dans lequel ledit élément de détection comporte un premier organe de détection (2 ; 18, 20) destiné à générer un premier signal de commande- correspondant à l'état de ladite première onde vibratoire progressive, et un second moyen de détection (6 ; 19, 21) destiné à générer un second signal de commande correspondant à l'état de ladite seconde onde vibratoire progressive.

8. Dispositif d'alimentation selon la revendication 7, dans lequel ledit élément de correction (10-12) détecte la différence de phase entre lesdits premier et second signaux de commande et modifie la phase d'au moins l'une desdites première et seconde ondes vibratoires progressives en fonction de ladite différence de phase détectée.

9. Dispositif d'alimentation selon la revendication 7 ou 8, dans lequel ledit premier organe de détection (2) est placé sur lesdits premiers moyens vibratoires (1, 3, 4) et ledit second organe de détection (6) est placé sur lesdits seconds moyens vibratoires (5, 7, 8).

10. Dispositif d'alimentation selon la revendication 9, dans lequel ledit second organe de détection (6) est placé dans une position sur lesdits seconds moyens vibratoires (5, 7, 8) correspondant spatialement à la position dudit premier organe de détection (2) sur lesdits premiers moyens vibratoires (1, 3, 4).

11. Dispositif d'alimentation selon la revendication 9 ou 10, dans lequel chacun desdits premier et second organes de détection (2, 6) comprend un organe piézo-électrique.

12. Dispositif d'alimentation selon la revendication 7 ou 8, dans lequel ledit premier organe de détection (18, 20) génère ledit premier signal de commande correspondant à la phase électrique dudit premier signal électrique appliqué et ledit second organe de détection (19, 21) génère ledit second signal de commande correspondant à la phase électrique dudit second signal électrique appliqué.

13. Dispositif d'alimentation selon l'une des revendications précédentes, dans lequel lesdits premiers moyens vibratoires (1, 3, 4) et lesdits seconds moyens vibratoires (5, 7, 8), respectivement, comprennent un élément élastique allongé, de forme circulaire, comprenant une partie droite.

14. Dispositif d'alimentation selon la revendication 13, dans lequel ladite feuille (9) est disposée de manière à être pincée entre la partie droite desdits premiers moyens vibratoires (1, 3, 4) et la partie droite desdits seconds moyens vibratoires (5, 7, 8).

15. Dispositif d'alimentation selon l'une des revendications précédentes, dans lequel lesdits premiers et seconds moyens vibratoires (1, 3 - 5, 7, 8) sont agencés de façon à établir un contact de frottement avec ladite feuille (9).
